# FASCICULE DE BREVET EUROPEEN

(11) **EP 0 749 609 B1**
(45) Date de publication et mention de la délivrance du brevet: **18.07.2001**
(21) Numéro de dépôt: 96901016.4
(22) Date de dépôt: 04.01.1996
(51) Int. Cl.: G06K 7/00

(54) **PROCEDE ET DISPOSITIF DE COMMANDE DU FONCTIONNEMENT D'UN OBJET PORTATIF ELECTRONIQUE ALIMENTE PAR SON ANTENNE**
VERFAHREN UND VORRICHTUNG ZUR BETRIEBSSTEUERUNG EINES ELEKTRONISCHEN ANTENNEGESPEISTEN TRAGBAREN GEGENSTANDES
METHOD AND DEVICE FOR CONTROLLING THE OPERATION OF A PORTABLE ELECTRONIC OBJECT SUPPLIED WITH POWER VIA AN ANTENNA

(30) Priorité: 11.01.1995 FR 9500272
(43) Date de publication de la demande: 27.12.1996
(73) Titulaire: FRANCE TELECOM, 75015 Paris (FR)
(72) Inventeur: BOUVIER, Jacky, F-38240 Meylan (FR)
(74) Mandataire: Casalonga, Axel
(86) Numéro de dépôt international: FR9600012
(87) Numéro de publication internationale: WO9621906

(56) Documents cités:
- EP-A- 0 400 764
- EP-A- 0 453 314
- EP-A- 0 583 690

## Description

L'invention concerne la commande du fonctionnement des moyens électroniques d'un objet portatif équipé d'une antenne permettant l'alimentation électrique de ces moyens électroniques.

L'invention s'applique avantageusement mais non limitativement au contrôle d'accès dans un bâtiment, par exemple. Lors d'un tel contrôle, le porteur de l'objet portatif, tel qu'une carte, présente celui-ci à proximité d'une borne coopérant électromagnétiquement avec l'antenne de la carte. L'énergie électromagnétique reçue par l'antenne de la carte permet d'alimenter la puce implantée à sa surface. Lorsque la tension d'alimentation fournie est suffisante, les moyens de traitement de la carte sont activés permettent la gestion du protocole d'échange de données entre la borne et la carte.

EP-A-0 400 764 décrit un système de transaction utilisant un terminal et un objet portatif couplé sans contact au terminal. Des moyens de détection de tension initient le fonctionnement du processeur de la carte lorsque la tension atteint un seuil prédéterminé et l'interrompent lorsque la tension détectée tombe en dessous du seuil précité.

EP-A-0 583 690 décrit un objet portatif destiné à être couplé sans contact à un terminal. Cet objet portatif est equipé d'un détecteur de la puissance du champ magnétique permettant, en fonction de la mesure de puissance d'activer ou non certains moyens de la carte.

EP-A-0 453 314 décrit également un objet portatif destiné à être couplé sans contact à un terminal, et conçu pour prévenir toute interruption du fonctionnement du processeur de l'objet même à faible consommation.

Or, lors de l'activation des moyens de traitement électroniques, ceux-ci absorbent brusquement une partie de l'énergie disponible en provoquant une chute brutale de la tension d'alimentation disponible. Il peut alors en résulter un arrêt du fonctionnement de ces moyens électroniques si la tension disponible chute en deçà d'un seuil plancher. Après l'arrêt du fonctionnement des moyens électroniques, la tension remonte pour permettre de nouveau l'activation des moyens électroniques, conduisant alors à une répétition du phénomème qui vient d'être décrit.

Ces à-coups successifs sont préjudiciables au bon fonctionnement de l'électronique de la carte.

L'invention vise à apporter une solution à ce problème.

Elle a pour but de permettre le démarrage franc des moyens de traitement électroniques de l'objet portatif, en évitant les arrêts et redémarrages successifs suite à un brusque appel de puissance. Telle que revendiquée, l'invention propose donc un dispositif de commande du fonctionnement des moyens de traitement électroniques d'un objet portatif équipé d'une antenne, comprenant, connecté à l'antenne, un redresseur délivrant à sa borne de sortie une tension primaire continue d'alimentation, des moyens de stabilisation pour générer une tension stabilisée continue à partir de ladite tension primaire, des premiers moyens d'élaboration d'un premier seuil de tension prédéterminé correspondant à un niveau prédéterminé de la tension continue d'alimentation stabilisée, des moyens de comparaison, dont la borne de sortie est connectée aux moyens de traitement, dont une première entrée est connectée à la sortie des premiers moyens d'élaboration, et dont une deuxième entrée est connectée à la borne de sortie du redresseur, une charge d'impédance choisie, connectée entre ladite borne de sortie du redresseur et la masse par l'intermédiaire d'un moyen de commutation commandable dont l'entrée de commande est reliée à la borne de sortie des moyens de comparaison.

Le niveau prédéterminé de la tension stabilisée (quasiment constante) correspond à un niveau suffisant d'alimentation des moyens électroniques disposés en aval du dispositif permettant un fonctionnement correct de ceux-ci. Par ailleurs, en raison notamment de l'absorption d'énergie inhérente aux moyens de stabilisation, la valeur de la tension stabilisée est inférieure à celle de la tension primaire. Aussi le premier seuil de tension (par exemple 5,5 Volts) est supérieur à ce niveau de la tension stabilisée (par exemple 4,2 Volts).

Quant à l'impédance de ladite charge, elle est choisie en fonction des caractéristiques électriques des moyens de traitement électroniques disposés en aval du dispositif selon l'invention. Plus précisément, l'impédance de cette charge est choisie en fonction de la quantité d'énergie absorbée par les moyens de traitement électroniques lors de leur activation (appel de puissance).

En d'autres termes, cette charge d'impédance choisie est utilisée, lors de la montée de la tension d'alimentation et lorsque les moyens de traitement électroniques ne sont pas encore activés, pour simuler au niveau de l'énergie absorbée, ces moyens de traitement électroniques. Ainsi lorsque la tension d'alimentation atteint ledit premier seuil de tension, la charge est déconnectée et les moyens de traitement électroniques sont activés, ce qui ne produit alors quasiment aucune chute de tension ou appel de puissance, puisque cette charge a été choisie pour être équivalente, au niveau consommation de courant ou absorption d'énergie, aux moyens de traitement électroniques.

La valeur de cette impédance peut être aisément obtenue par une mesure de courant par exemple.

Telle que revendiquée, l'invention a également pour objet un procédé de commande du fonctionnement des moyens électroniques d'un objet portatif équipé d'une antenne, dans lequel on génère à partir de l'énergie reçue par l'antenne, une tension primaire continue et on génère une tension stabilisée à partir de ladite tension primaire, on compare ladite tension primaire à un premier seuil de tension prédéterminé correspondant à un niveau de tension stabilisée prédéterminé, on connecte une charge d'impédance choisie entre la tension primaire et la masse tant que ladite tension primaire reste inférieure audit premier seuil de tension, les moyens de traitement électroniques étant alors inactifs, et lorsque la tension primaire atteint ledit seuil de tension, on déconnecte ladite charge, on active les moyens de traitement électroniques et on les alimente par ladite tension stabilisée.

En fait, selon un mode de mise en oeuvre, on compare ladite tension primaire audit premier seuil de tension prédéterminé en comparant une tension primaire auxiliaire égale à une fraction prédéterminée de ladite tension primaire, avec une première tension stabilisée auxiliaire égale à une première fraction prédéterminée de ladite tension stabilisée.

Ainsi, selon un mode de réalisation du dispositif selon l'invention, ce dernier comprend un pont diviseur auxiliaire connecté entre la borne de sortie du redresseur et la masse et dont le point milieu est relié à la deuxième entrée des moyens de comparaison. Les premiers moyens d'élaboration comprennent alors un premier pont diviseur connecté entre la sortie des moyens de stabilisation et la masse et dont le point milieu est relié à la première entrée des moyens de comparaison.

Bien que l'invention puisse être mise en oeuvre en utilisant un seul seuil de tension, il a été jugé préférable de prévoir une hystérésis dans la comparaison de seuil. En d'autres termes, les moyens de traitement électroniques étant activés, on compare la tension primaire à un deuxième seuil de tension prédéterminé inférieur au premier seuil de tension, et correspondant également audit niveau de tension prédéterminé pour la tension stabilisée, et lorsque la tension primaire atteint ce deuxième seuil de tension, on désactive les moyens de traitement électroniques tout en reconnectant ladite charge.

Ledit deuxième seuil de tension pour la tension primaire (par exemple 4,6 Volts), inférieur au premier seuil de tension (5,5 Volts), permet ainsi de détecter avantageusement une chute de la tension primaire et de désactiver les moyens électroniques alors qu'ils sont toujours en fonctionnement correct.

Selon un mode de mise en oeuvre, on compare ladite tension primaire audit deuxième seuil de tension prédéterminé en comparant ladite tension primaire auxiliaire égale à ladite fraction prédéterminée de ladite tension primaire, avec une deuxième tension stabilisée auxiliaire égale à une deuxième fraction prédéterminée de ladite tension stabilisée.

Afin de réaliser une telle hystérésis, le dispositif comprend avantageusement en outre des deuxièmes moyens d'élaboration d'un deuxième seuil de tension prédéterminé correspondant également au niveau prédéterminé de la tension continue d'alimentation stabilisée, et des moyens de sélection commandables, dont l'entrée de commande est reliée à la borne de sortie des moyens de comparaison, pour relier à la première entrée des moyens de comparaison, soit la sortie des premiers moyens d'élaboration, soit la sortie des deuxièmes moyens d'élaboration.

Plus particulièrement, il comprend une première résistance connectée entre la sortie des moyens de stabilisation et la première entrée des moyens de comparaison, ainsi qu'une deuxième et une troisième résistances connectées en série entre la première entrée des moyens de comparaison et la masse. Le premier pont diviseur est alors formé par les trois résistances tandis que les deuxièmes moyens d'élaboration comportent un deuxième pont diviseur formé par les première et troisième résistances. Les moyens de sélection comportent alors un moyen auxiliaire de commutation commandable connecté en parallèle aux bornes de la deuxième résistance pour la court-circuiter ou non et relier en conséquence le point milieu du deuxième pont diviseur ou le point milieu du premier pont diviseur à la première entrée des moyens de comparaison.

Le moyen de commutation commandable peut comporter un transistor dont la grille est reliée à la sortie des moyens de comparaison par un inverseur.

Par ailleurs, afin notamment de faciliter le démarrage des moyens de stabilisation, ceux-ci comportent de préférence des moyens de génération d'une tension de référence prédéterminée (par exemple 2,8 Volts), dont l'entrée est reliée à la borne de sortie du redresseur, ainsi qu'un amplificateur différentiel dont l'une des entrées est reliée à la sortie des moyens de génération et dont la sortie, délivrant ladite tension stabilisée, est rebouclée sur l'autre entrée de l'amplificateur.

L'invention propose également un objet portatif, comportant une antenne, des moyens de traitement électroniques alimentés à partir de l'énergie reçue par l'antenne, et un dispositif de commande du fonctionnement des moyens de traitement électroniques, tel que défini précédemment, et connecté entre l'antenne et les moyens de traitement électroniques.

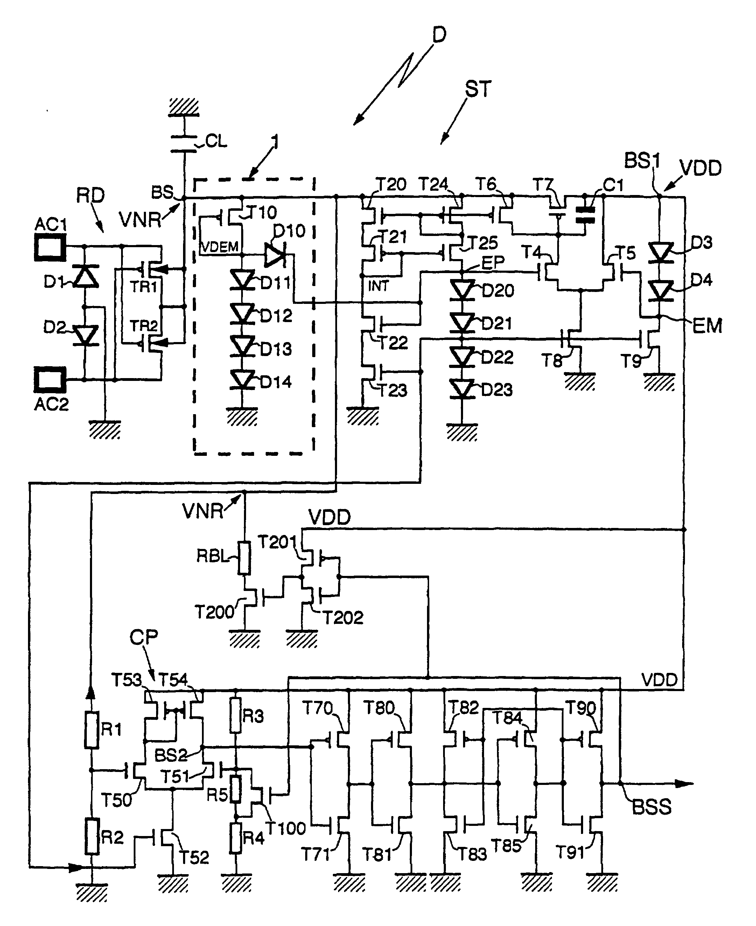

D'autres avantages et caractéristiques de l'invention apparaîtront à l'examen de la description détaillée d'un mode de réalisation nullement limitatif de l'invention, illustré sur la figure unique représentant un synoptique schématique d'un tel mode de réalisation.

Tel qu'illustré sur cette figure, le dispositif D selon l'invention comporte, en tête, un redresseur RD dont les deux bornes d'entrée *sont* respectivement connectées aux deux bornes AC1 et AC2 d'une bobine électromagnétique formant l'antenne de l'objet portatif sur lequel est implanté ce dispositif.

Ce redresseur comporte deux diodes D1 et D2 dont les anodes sont reliées à la masse et dont les cathodes sont respectivement reliées à deux transistors à effet de champ TR1 et TR2 dont les sources et substrats respectifs, formant la borne de sortie BS de ce redresseur, sont reliés à la masse par l'intermédiaire d'un condensateur de lissage CL.

A cette borne de sortie BS, sont connectés des moyens de stabilisation de tension, portant la référence générale ST.

Ces moyens de stabilisation ST comportent en tête, des moyens 1 de génération d'une tension de référence VDEM à partir de la tension primaire continue d'alimentation VNR disponible à la borne de sortie BS.

Plus précisémment, ces moyens 1 comportent une série de quatre diodes identiques D11 à D14 connectées entre la borne BS et la masse par l'intermédiaire d'un transistor T10 à effet de champ, dont la grille est rebouclée sur le drain.

Cette tension de référence VDEM, disponible à l'anode de la première diode D11 est alors injectée par l'intermédiaire d'une diode D10, à l'entrée positive EP d'un amplificateur différentiel autour duquel s'articule la deuxième partie des moyens de stabilisation.

Cet amplificateur différentiel est formé ici autour d'une paire différentielle de transistors à effet de champ T4 et T5 dont les sources respectives sont reliées à la masse par un transistor à effet de champ T8 formant une source de courant. L'entrée négative de cet amplificateur différentiel se situe au niveau de la grille EM du transistor T5.

La sortie BS1 de cet amplificateur, constituée par le drain du transistor T5 est rebouclée sur l'entrée négative EM par l'intermédiaire de deux diodes D3 et D4, à travers lesquelles est maintenu un courant constant à l'aide du transistor T9, formant une source de courant, et connecté entre la cathode de la diode D4 et la masse.

Entre l'entrée positive EP de l'amplificateur différentiel et la masse sont connectées une série de quatre diodes D20 à D23, identiques aux diodes D3 et D4 et réalisant également une tension de référence.

Les bornes BS et BS1 sont reliées entre elles par l'intermédiaire d'un transistor T7 assurant la fonction de résistance variable ou ballast.

Le transistor T6, connecté entre le drain du transistor T4 et la borne BS constitue une charge pour ce transistor, tandis que la capacité C1 connectée entre le drain du transistor T4 et la borne TS1 assure la stabilisation de cet amplificateur rebouclé.

A la cathode de la diode D21 est présente une tension de polarisation permettant de polariser les transistors T8 et T9 d'une part, et le transistor T23 d'autre part, qui, avec les transistors T22, T21, T20, T24 et T25, font partie d'un miroir de courant permettant de stabiliser la tension à l'entrée EP.

Entre la borne de sortie BS1 des moyens de stabilisation et la masse sont connectées en série trois résistances R3, R5 et R4.

La borne commune de la première résistance R3 (par exemple 450 kΩ) et de la deuxième résistance R5 (par exemple 248 kΩ) est reliée à la grille d'un transistor T51 formant avec un transistor homologue T50, le coeur d'un comparateur CP. Les transistors T53 et T54, respectivement connectés au drain des transistors T50 et T51 forment une charge pour ceux-ci, alimentée par la tension stabilisée VDD disponible à la borne BS1. Par ailleurs, le transistor T52, relié entre les sources des transistors T50 et T51 et la masse, est polarisé d'une façon analogue aux transistors T23, T8 et T9, et forme une source de courant. Alors que la première entrée de ce comparateur se situe au niveau de la grille du transistor T51, sa deuxième entrée se situe au niveau de la grille du transistor T50, et sa sortie BS2 au niveau du drain du transistor T51.

Entre la borne de sortie BS du redresseur et la masse sont connectées en série deux résistances R1 (par exemple 446 kΩ) et R2 (par exemple 400 kΩ) formant un pont diviseur auxiliaire dont le point milieu est relié à la deuxième entrée du comparateur CP.

Comme on le verra plus en détail ci-après, la sortie BS2 du comparateur CP délivre un signal logique d'activation des moyens de traitement électroniques reliés à la borne de sortie BS du dispositif et alimentés par la tension continue stabilisée VDD quasiment constante et dont la valeur nominale est par exemple de 4,2 Volts.

En fait, ce signal logique délivré par le comparateur est mis en forme dans un circuit approprié avant d'être délivré à la borne de sortie BSS.

Plus précisémment, ce circuit de mise en forme comporte tout d'abord une paire de transistors complémentaires T70, T71 formant un amplificateur, suivie d'un circuit de déclenchement ("trigger" en langue anglaise) formé des transistors T80 à T85, et enfin d'un amplificateur inverseur final formé des deux transistors complémentaires T90 et T91.

Par ailleurs, aux bornes de la deuxième résistance R5, est connecté un transistor à effet de champ T100 dont la grille (entrée de commande) est reliée à la sortie du comparateur CP par l'intermédiaire du circuit de mise en forme.

Comme on le verra plus en détail ci-après, ce transistor T100 forme des moyens de sélection de l'un ou l'autre de deux ponts diviseurs formés à partir des trois résistances R3 à R5 connectées en série. Ainsi, si le transistor T100 est bloqué, c'est-à-dire si la résistance R5 n'est pas court-circuitée, la première résistance R3 d'une part et les deux autres résistances R5 et R4 (par exemple 483 kΩ) d'autre part forment un premier pont diviseur délivrant à la première entrée du comparateur CP une première fraction de la tension stabilisée VDD.

Si par contre le transistor T100 est passant, court-circuitant la résistance R5, la résistance R3 d'une part et la résistance R4 d'autre part forment alors un deuxième pont diviseur délivrant à la première entrée du comparateur, une deuxième fraction de la tension VDD.

Le dispositif comporte également une charge d'impédance choisie, ici une résistance RBL, connectée entre la borne de sortie BS du redresseur et la masse par l'intermédiaire d'un transistor à effet de champ T200. Ce transistor est commandé sur sa grille par le signal disponible à la borne de sortie BSS par l'intermédiaire d'un inverseur formé de deux transistors complémentaires à effet de champ T201 et T202 alimentés par la tension VDD.

On va maintenant décrire en détail le fonctionnement du dispositif selon l'invention.

La tension alternative reçue en entrée du redresseur et provenant de l'énergie radiofréquence reçue au niveau de l'antenne inductive, génère à la borne de sortie BS une tension primaire continue VNR non stabilisée.

Au démarrage, la tension VDEM est grossièrement stabilisée à quatre seuils de diodes, soit 2,8 V environ, par l'intermédiaire des quatres diodes D11 à D14 alimentées par l'intermédiaire du transistor T10. Cette tension VDEM est injectée, par l'intermédiaire de la diode D10, à l'entrée EP des moyens de stabilisation et permet ainsi d'initier le fonctionnement en boucle de l'amplificateur T4, T5 délivrant à sa sortie la tension continue stabilisée VDD.

En l'absence des moyens 1, la tension au point EP pourrait, dans certains cas, éventuellement rester à la valeur nulle ce qui ne permettrait pas d'obtenir en sortie la tension VDD désirée.

Dans le cas présent, la tension VDD nominale délivrée est égale aux six seuils identiques des diodes D20 à D23, D3 et D4, soit environ 4,2 V, ce qui s'avère dans cet exemple de réalisation, suffisant pour alimenter les moyens de traitement électroniques connectés à la borne de sortie BSS.

Au début de la coopération électromagnétique entre l'objet portatif et la source d'énergie, par exemple une borne dans une application de contrôle d'accès, et tant que la tension d'alimentation stabilisée n'a pas atteint un premier seuil de tension (ici 5,5 Volts) permettant l'aclivation des moyens électroniques de cet objet portatif, le signal logique de validation délivré à la sortie BSS, est à l'état logique zéro de sorte que le transistor T100 est bloqué.

Le comparateur CP compare alors la fraction de la tension primaire VNR, obtenue par le pont diviseur R1, R2, à la première fraction de la tension stabilisée VDD obtenue à partir du premier pont diviseur formé par la résistance R3 d'une part et les résistances (R5, R4) d'autre part.

Le signal logique de validation passe alors à l'état logique 1 lorsque ces deux fractions sont égales.

Compte tenu des différentes valeurs des résistances employées ici, le signal logique passe à l'état 1 lorsque la tension VNR atteint le premier seuil de tension égale à 5,5 Volts, correspondant au niveau nominal pour la tension VDD égale à 4,2 volts.

Tant que la tension VNR n'a pas atteint le premier seuil de tension, le transistor T200 reçoit sur sa grille un signal de commande ayant la valeur logique 1 (en raison de l'inverseur T201 et T202) ce qui le rend passant.

Aussi, la résistance RBL est électriquement connectée entre la tension VNR et la masse.

Lorsque le signal logique de validation passe à l'état logique 1, permettant l'activation des moyens électroniques, le transistor T200 se bloque, déconnectant électriquement la résistance RBL.

Puisque cette résistance RBL est choisie de façon à être électriquement équivalente aux moyens de traitement électroniques de l'objet portatif (au niveau absorption d'énergie et consommation de courant) il n'y a donc quasiment aucune chute de tension lors de l'activation des moyens électroniques de traitement. En d'autres termes, cette activation est quasiment "transparente" vis-à-vis de la tension d'alimentation VNR.

Une façon simple d'ajuster la valeur de cette résistance consiste à effectuer une mesure de courant dans le dispositif avec une tension VNR connue.

Plus précisément, on peut mesurer le courant dans le dispositif juste avant et juste après l'activation des moyens électroniques de traitement. Le rapport entre la valeur du premier seuil de tension et la variation de courant correspondante permet de déterminer simplement une valeur de résistance, par application de la loi d'Ohm.

On peut alors aisément vérifier que cette valeur est correctement choisie en effectuant de nouveau une mesure de courant, par exemple le courant circulant dans la résistance, dans les mêmes conditions. Si la valeur de résistance est convenablement choisie, la variation de courant dans cette résistance est quasiment nulle.

Lors d'un arrêt du protocole de dialogue entre l'objet portatif et la source d'énergie, la tension d'alimentation VNR chute. Aussi, afin de permettre un arrêt franc des moyens de traitement électroniques, lorsque ceux-ci sont encore suffisamment alimentés, on compare, au niveau du comparateur CP, la fraction de la tension d'alimentation VNR, obtenue à partir du pont diviseur auxiliaire (R1, R2), avec la deuxième fraction de la tension VDD, obtenue à partir du pont diviseur R3 et R4 (puisque la résistance R5 est court-circuitée).

Compte tenu des valeurs de résistance utilisées ici, le signal logique de validation repasse à l'état logique zéro lorsque la tension VNR atteint le seuil bas de tension égal à 4,6 Volts, ce qui correspond également au niveau nominal de la tension stabilisée.

Le signal logique de validation, en repassant à l'état zéro, bloque alors de nouveau le transistor T100, et rend passant le transistor T200 de façon à permettre ultérieurement un nouveau démarrage éventuel sans à-coups des moyens de traitement électroniques de l'objet portatif.

## Revendications

1. Procédé de commande du fonctionnement des moyens électroniques d'un objet portatif équipé d'une antenne, dans lequel on génère à partir de l'énergie reçue par l'antenne, une tension primaire continue (VNR), on génère une tension stabilisée (VDD) à partir de ladite tension primaire, on compare ladite tension primaire à un premier seuil de tension, prédéterminé correspondant à un niveau de tension stabilisée prédéterminé, caractérisé par le fait qu'on connecte une charge (RBL) d'impédance choisie entre la tension primaire et la masse tant que ladite tension primaire reste inférieure audit premier seuil de tension, les moyens de traitement électroniques étant alors inactifs, et lorsque la tension primaire atteint ledit seuil de tension, on déconnecte ladite charge, on active les moyens de traitement électroniques et on les alimente par ladite tension stabilisée.

2. Procédé selon la revendication 1, caractérisé par le fait que, les moyens de traitement électroniques étant activés, on compare la tension primaire (VNR) à un deuxième seuil de tension prédéterminé inférieur au premier seuil de tension, et correspondant également au niveau de tension prédéterminé de la tension stabilisée, et lorsque la tension primaire atteint ce deuxième seuil de tension, on désactive les moyens de traitement électroniques tout en reconnectant ladite charge (RBL).

3. Procédé selon la revendication 1 ou 2, caractérisé par le fait qu'on compare ladite tension primaire audit premier seuil de tension prédéterminé en comparant une tension primaire auxiliaire égale à une fraction prédéterminée de ladite tension primaire, avec une première tension stabilisée auxiliaire égale à une première fraction prédéterminée de ladite tension stabilisée.

4. Procédé selon les revendications 2 et 3, caractérisé par le fait qu'on compare ladite tension primaire audit deuxième seuil de tension prédéterminé en comparant ladite tension primaire auxiliaire égale à ladite fraction prédéterminée de ladite tension primaire, avec une deuxième tension stabilisée auxiliaire égale à une deuxième fraction prédéterminée de ladite tension stabilisée.

5. Dispositif de commande du fonctionnement des moyens de traitement électroniques d'un objet portatif équipé d'une antenne, comprenant, connecté à l'antenne, un redresseur (RD) délivrant à sa borne de sortie (BS) une tension primaire continue d'alimentation (VNR), des moyens de stabilisation (1,ST) pour générer une tension stabilisée continue (VDD) à partir de ladite tension primaire, des premiers moyens d'élaboration (R3, R4, R5) d'un premier seuil de tension prédéterminé correspondant à un niveau prédéterminé de la tension continue d'alimentation stabilisée, caractérisé par le fait qu'il comprend en outre des moyens de comparaison (CP), dont la borne de sortie (BSS) est connectée aux moyens de traitement, dont une première entrée est connectée à la sortie des premiers moyens d'élaboration, et dont une deuxième entrée est connectée à la borne de sortie (BS) du redresseur, ainsi qu'une charge (RBL) d'impédance choisie, connectée entre ladite borne de sortie du redresseur et la masse par l'intermédiaire d'un moyen de commutation commandable (T200) dont l'entrée de commande est reliée à la borne de sortie des moyens de comparaison (CP).

6. Dispositif selon la revendication 5, caractérisé par le fait qu'il comprend en outre des deuxièmes moyens d'élaboration (R3, R4) d'un deuxième seuil de tension prédéterminé correspondant également au niveau prédéterminé de la tension continue d'alimentation stabilisée, et des moyens de sélection commandables (T100), dont l'entrée de commande est reliée à la borne de sortie des moyens de comparaison, pour relier à la première entrée des moyens de comparaison, soit la sortie des premiers moyens d'élaboration, soit la sortie des deuxièmes moyens d'élaboration.

7. Dispositif selon la revendication 5 ou 6, caractérisé par le fait qu'il comprend un pont diviseur auxiliaire (R1, R2) connecté entre la borne de sortie du redresseur et la masse et dont le point milieu est relié à la deuxième entrée des moyens de comparaison (CP), et par le fait que les premiers moyens d'élaboration comprennent un premier pont diviseur (R3, R4, R5) connecté entre la sortie des moyens de stabilisation (ST) et la masse et dont le point milieu est relié à la première entrée des moyens de comparaison (CP).

8. Dispositif selon les revendications 6 et 7, caractérisé par le fait qu'il comprend une première résistance (R3) connectée entre la sortie des moyens de stabilisation et la première entrée des moyens de comparaison, ainsi qu'une deuxième (R5) et une troisième (R4) résistances connectées en série entre la première entrée des moyens de comparaison et la masse,
par le fait que le premier pont diviseur est formé par les trois résistances (R3, R4, R5) tandis que les deuxièmes moyens d'élaboration comportent un deuxième pont diviseur formé par les première (R3) et troisième (R4) résistances,
et par le fait que les moyens de sélection comportent un moyen auxiliaire de commutation commandable (T100) connecté en parallèle aux bornes de la deuxième résistance (R5) pour la court-circuiter ou non et relier en conséquence le point milieu du deuxième pont diviseur ou le point milieu du premier pont diviseur à la première entrée des moyens de comparaison (CP).

9. Dispositif selon l'une des revendications précédentes, caractérisé par le fait que le moyen de commutation commandable comporte un transistor (T100) dont la grille est reliée à la sortie des moyens de comparaison par un inverseur (T90,T91).

10. Dispositif selon l'une des revendications précédentes, caractérisé par le fait que les moyens de stabilisation comportent des moyens (1) de génération d'une tension de référence prédéterminée (VDEM), dont l'entrée est reliée à la borne de sortie (BS) du redresseur, ainsi qu'un amplificateur différentiel (T4, T5) dont l'une des entrées est reliée à la sortie des moyens de génération (1) et dont la sortie, délivrant ladite tension stabilisée, est rebouclée sur l'autre entrée de l'amplificateur.

11. Objet portatif, comportant une antenne, des moyens de traitement électroniques alimentés à partir de l'énergie reçue par l'antenne, et un dispositif de commande du fonctionnement des moyens de traitement électroniques, tel que défini dans l'une des revendications 5 à 10, et connecté entre l'antenne et les moyens de traitement électroniques.

## Claims

1. Process for controlling the operation of the electronic means of a portable object equipped with an antenna, in which a primary DC voltage (VNR) is generated from the energy received by the antenna, a stabilized voltage (VDD) is generated from the said primary voltage, the said primary voltage is compared with a first prespecified voltage threshold corresponding to a prespecified stabilized voltage level, charcterized in that a load (RBL) with chosen impedance is connected between the primary voltage and earth so long as the said primary voltage remains below the said first voltage threshold, the electronic processing means then being inactive, and when the primary voltage reaches the said voltage threshold, the said load is disconnected, the electronic processing means are activated and are supplied with the said stabilized voltage.

2. Process according to Claim 1, characterized in that, the electronic processing means being activated, the primary voltage (VNR) is compared with a second prespecified voltage threshold below the first voltage threshold, and also corresponding to the prespecified voltage level of the stabilized voltage, and when the primary voltage reaches this second voltage threshold, the electronic processing means are deactivated whilst reconnecting the said load (RBL).

3. Process according to Claim 1 or 2, characterized in that the said primary voltage is compared with the said first prespecified voltage threshold by comparing an auxiliary primary voltage equal to a prespecified fraction of the said primary voltage with a first auxiliary stabilized voltage equal to a first prespecified fraction of the said stabilized voltage.

4. Process according to Claims 1 and 3, characterized in that the said primary voltage is compared with the said second prespecified voltage threshold by comparing the said auxiliary primary voltage equal to the said prespecified fraction of the said primary voltage with a second auxiliary stabilized voltage equal to a second prespecified fraction of the said stabilized voltage.

5. Device for controlling the operation of the electronic processing means of a portable object equipped with an antenna, which comprises, connected to the antenna, a rectifier (RD) delivering a primary DC supply voltage (VNR) at its output terminal (BS), stabilizing means (1, ST) for generating a stabilized DC voltage (VDD) from the said primary voltage, first means (R3, R4, R5) for calculating a first prespecified voltage threshold corresponding to a prespecified level of the stabilized DC supply voltage, characterized in that it furthermore comprises comparison means (CP), the output terminal. (BSS) of which is connected to the processing means, a first input of which is connected to the output of the first calculating means, and a second input of which is connected to the output terminal (BS) of the rectifier, as well as a load (RBL). with chosen impedance, connected between the said output terminal of the rectifier and earth by way of a controllable switching means (T200) whose control input is joined to the output terminal of the comparison means (CP).

6. Device according to Claim 5, characterized in that it furthermore comprises second means (R3, R4) for calculating a second prespecified voltage threshold also corresponding to the prespecified level of the stabilized DC supply voltage, and controllable selection means (T100), the control input of which is joined to the output terminal of the comparison means, in order to join, to the first input of the comparison means, either the output of the first calculating means or the output of the second calculating means.

7. Device according to Claim 5 or 6, characterized in that it comprises an auxiliary divider bridge (R1, R2) connected between the output terminal of the rectifier and earth and whose mid-point is joined to the second input of the comparison means (CP), and in that the first calculating means comprise a first divider bridge (R3, R4, R5) connected between the output of the stabilizing means (ST) and earth and whose mid-point is joined to the first input of the comparison means (CP).

8. Device according to Claims 6 and 7, characterized in that it comprises a first resistor (R3) connected between the output of the stabilizing means and the first input of the comparison means, as well as second (R5) and third (R4) resistors connected in series between the first input of the comparison means and earth,
in that the first divider bridge is formed by the three resistors (R3, R4, R5) whereas the second calculating means include a second divider bridge formed by the first (R3) and third (R4) resistors,
and in that the selection means include an auxiliary controllable switching means (T100) connected in parallel to the terminals of the second resistor (R5) in order to short-circuit or not the latter and as a consequence to join the mid-point of the second divider bridge or the mid-point of the first divider bridge to the first input of the comparison means (CP).

9. Device according to one of the preceding claims, characterized in that the controllable switching means includes a transistor (T100) whose gate is joined to the output of the comparison means via an invertor (T90, T91).

10. Device according to one of the preceding claims, characterized in that the stabilizing means include means (1) for generating a prespecified reference voltage (VDEM), the input of which is joined to the output terminal (BS) of the rectifier, as well as a differential amplifier (T4, T5) one of the inputs of which is joined to the output of the generating means (1) and the output of which, delivering the said stabilized voltage, is looped-back to the other input of the amplifier.

11. Portable object, including an antenna, electronic processing means supplied from the energy received by the antenna, and a device for controlling the operation of the electronic processing means, such as defined in one of Claims 5 to 10, and connected between the antenna and the electronic processing means.

## Patentansprüche

1. Verfahren zur Steuerung der Funktion der elektronischen Mittel eines mit einer Antenne ausgestatteten tragbaren Gegenstandes, bei dem aus der durch die Antenne erhaltenen Energie eine kontinuierliche Primärspannung (VNR) erzeugt wird, aus der Primärspannung eine stabilisierte Spannung (VDD) erzeugt wird, diese Primärspannung mit einer ersten vorbestimmten Spannungsschwelle verglichen wird, die einem vorbestimmten stabilisierten Spannungsniveau entspricht, dadurch gekennzeichnet, daß eine ausgewählte Widerstandslast (RBL) zwischen der Primärspannung und der Masse angelegt wird, solange die Primärspannung kleiner als die erste Spannungsschwelle ist, wobei die elektronischen Bearbeitungsmittel nun inaktiv sind, und wenn die Primärspannung die Spannungsschwelle erreicht, die Last abgetrennt wird, die elektronischen Bearbeitungsmittel aktiviert und durch die stabilisierte Spannung versorgt werden.

2. Verfahren nach Anspruch 1, dadurch gekennzeichnet, daß, wenn die elektronischen Bearbeitungsmittel aktiviert sind, die Primärspannung (VNR) mit einer zweiten vorbestimmten Spannungsschwelle verglichen wird, die kleiner als die erste Spannungsschwelle ist und auch dem vorbestimmten Spannungsniveau der stabilisierten Spannung entspricht, und wenn die Primärspannung diese zweite Spannungsschwelle erreicht, die elektronischen Bearbeitungsmittel deaktiviert werden, indem die Last (RBL) wieder angeschlossen wird.

3. Verfahren nach Anspruch 1 oder 2, dadurch gekennzeichnet, daß die Primärspannung mit der ersten vorbestimmten Spannungsschwelle verglichen wird, indem eine Hilfsprimärspannung, die gleich einem vorbestimmten Bruchteil der Primärspannung ist, mit einer ersten stabilisierten Hilfsspannung verglichen wird, die gleich einem ersten vorbestimmten Bruchteil der stabilisierten Spannung ist.

4. Verfahren nach den Ansprüchen 2 und 3, dadurch gekennzeichnet, daß die Primärspannung mit der zweiten vorbestimmten Spannungsschwelle verglichen wird, indem die Primärhilfsspannung gleich dem vorbestimmten Bruchteil der Primärspannung mit einer zweiten stabilisierten Hilfsspannung gleich einem zweiten vorbestimmten Bruchteil der stabilisierten Spannung verglichen wird.

5. Steuereinrichtung für die Funktion der elektronischen Bearbeitungsmittel eines mit einer Antenne versehenen tragbaren Gegenstandes, umfassend, an die Antenne angeschlossen, einen Gleichrichter (RD), der an seiner Ausgangsklemme (BS) eine kontinuierliche Primärversorgungsspannung (VNR) liefert, Stabilisierungsmittel (1, ST), um eine kontinuierliche stabilisierte Spannung (VDD) aus der Primärspannung zu erzeugen, erste Mittel zur Erstellung (R3, R4, R5) einer ersten vordefinierten Spannungsschwelle, die einem vorbestimmten Niveau der stabilisierten kontinuierlichen Versorgungsspannung entspricht, dadurch gekennzeichnet, daß ferner umfaßt sind Vergleichsmittel (CP), deren Ausgangsklemme (BSS) an die Bearbeitungsmittel angeschlossen ist, deren erster Eingang an den Ausgang der ersten Erstellungsmittel angeschlossen ist, und deren zweiter Eingang an die Ausgangsklemme (BS) des Gleichrichters angeschlossen ist, sowie eine ausgewählte Widerstandslast (RBL), die zwischen der Ausgangsklemme des Gleichrichters und der Masse mit Hilfe eines steuerbaren Umschaltmittels (T200) angeschlossen ist, dessen Steuereingang mit der Ausgangsklemme der Vergleichsmittel (CP) verbunden ist.

6. Einrichtung nach Anspruch 5, dadurch gekennzeichnet, daß ferner zweite Erstellungsmittel (R3, R4) einer zweiten vorbestimmten Spannungsschwelle, die ebenfalls dem vorbestimmten Niveau der kontinuierlichen stabilisierten Versorgungsspannung entspricht, und steuerbare Auswahlmittel (T100) umfaßt sind, deren Steuereingang an die Ausgangsklemme der Vergleichsmittel angeschlossen ist, um an den ersten Eingang der Vergleichsmittel entweder den Ausgang der ersten Erstellungsmittel oder den Ausgang der zweiten Erstellungsmittel anzuschließen.

7. Einrichtung nach Anspruch 5 oder 6, dadurch gekennzeichnet, daß eine Hilfsteilungsbrücke (R1, R2) umfaßt ist, die zwischen der Ausgangsklemme des Gleichrichters und der Masse angeschlossen ist und deren Mittelpunkt an die zweite Eingangsklemme der Vergleichsmittel (CP) angeschlossen ist, und daß die ersten Erstellungsmittel eine erste Teilungsbrücke (R3, R4, R5) umfassen, die zwischen dem Ausgang der Stabilisierungsmittel (ST) und der Masse angeschlossen ist, und deren Mittelpunkt mit dem ersten Eingang der Vergleichsmittel (CP) verbunden ist.

8. Einrichtung nach den Ansprüchen 6 und 7, dadurch gekennzeichnet, daß ein erster Widerstand (R3) umfaßt ist, der zwischen dem Ausgang der Stabilisierungsmittel und dem ersten Eingang der Vergleichsmittel angeschlossen ist, sowie ein zweiter (R5) und dritter (R4) Widerstand, die in Serie zwischen dem ersten Eingang der Vergleichsmittel und der Masse angeschlossen sind,
und daß die erste Teilungsbrücke von den drei Widerständen (R3, R4, R5) gebildet wird, während die zweiten Erstellungsmittel eine zweite Teilungsbrücke umfassen, die von dem ersten (R3) und dritten (R4) Widerstand gebildet wird,
und daß die Auswahlmittel ein steuerbares Hilfsumschaltmittel (T100) umfassen, das parallel an die Klemmen des zweiten Widerstandes (R5) angeschlossen ist, um ihn kurzzuschließen oder nicht und folglich den Mittelpunkt der zweiten Teilungsbrücke oder den Mittelpunkt der ersten Teilungsbrücke mit dem ersten Eingang der Vergleichsmittel (CP) zu verbinden.

9. Einrichtung nach einem der vorhergehenden Ansprüche, dadurch gekennzeichnet, daß das steuerbare Umschaltmittel einen Transistor (T100) umfaßt, dessen Gate-Elektrode an den Ausgang der Vergleichsmittel durch einen Umschalter (T90, T92) angeschlossen ist.

10. Einrichtung nach einem der vorhergehenden Ansprüche, dadurch gekennzeichnet, daß die Stabilisierungsmittel Mittel (1) zur Erzeugung einer vorbestimmten Referenzspannung (VDEM) umfassen, deren Eingang an die Ausgangsklemme (85) des Gleichrichters angeschlossen ist, sowie einen Differentialverstärker (T4, T5), von dem einer der Eingänge an den Ausgang der Erzeugungsmittel (1) angeschlossen ist, und dessen Ausgang, der die stabilisierte Spannung liefert, am anderen Eingang des Verstärkers wieder zur Schleife geschaltet ist.

11. Tragbarer Gegenstand, umfassend eine Antenne, elektronische Bearbeitungsmittel, die mit der Energie, die von der Antenne erhalten wird, versorgt werden, und eine Steuereinrichtung für die Funktion der elektronischen Bearbeitungsmittel, wie in einem der Ansprüche 5 bis 10 definiert, welche zwischen der Antenne und den elektronischen Bearbeitungsmitteln angeschlossen ist.
